# EUROPÄISCHE PATENTSCHRIFT

(11) **EP 2 000 337 B1**
(45) Veröffentlichungstag und Bekanntmachung des Hinweises auf die Patenterteilung: **21.03.2012**
(21) Anmeldenummer: 08009045.9
(22) Anmeldetag: 16.05.2008
(51) Int. Cl.: B60H 1/00

(54) **Gebläseanordnung zur Belüftung eines Fahrzeugs**
Fan assembly for ventilating a vehicle
Agencement de ventilateur destiné à l'aération d'un véhicule

(30) Priorität: 06.06.2007 DE 102007026808
(43) Veröffentlichungstag der Anmeldung: 10.12.2008
(73) Patentinhaber: Behr GmbH & Co. KG, 70469 Stuttgart (DE)
(72) Erfinder: Schuch, Andreas, 71636 Ludwigsburg (DE); Augull, Michael, 71088 Holzgerlingen (DE); Pfander, Andreas, 71384 Weinstadt (DE); Burkhardt, Carsten, 74653 Künzelsau (DE)
(74) Vertreter: Grauel, Andreas

(56) Entgegenhaltungen:
- DE-A1- 19 838 174
- DE-A1- 19 954 308
- DE-A1-102005 001 970
- US-A- 6 138 749

## Beschreibung

Die Erfindung betrifft eine Gebläseanordnung, welche in der Klimaanlage eines Kraftfahrzeugs angeordnet ist.

Klimaanlagen für Kraftfahrzeuge sorgen für eine Zufuhr von klimatisch aufbereiteter Luft in den Innenraum des Kraftfahrzeugs, wo sie in der Regel im Bereich des Armaturenbretts aus dem Klimagerät austritt. Einzelne Auslässe sind insbesondere im Fußbereich, im Mittelbereich und nahe der Innenseite der Windschutzscheibe angeordnet. Klimaanlagen werden zumeist im Frischluftmodus betrieben, wobei Luft aus der Umgebung (zumeist im Bereich unterhalb der Windschutzscheibe) angesaugt, klimatisch aufbereitet und anschließend dem Innenraum zugeführt wird. Eine Klimaanlage kann auch im Umluftmodus betrieben werden, d. h. es wird keine Luft von außen zugeführt, sondern im Innenraum angesaugt, aufbereitet und wieder dem Innenraum zugeführt.

Bei Fahrzeugen der Oberklasse oder bei Fahrzeugen mit einem großen Innenraum wird häufig ein Zusatzklimagerät eingesetzt, welches zumeist im hinteren Bereich der Mittelkonsole angeordnet ist, und insbesondere dem Fondbereich klimatisierte Luft zuführt. Diese arbeiten aufgrund des begrenzten Einbauraums in der Regel jedoch nur im Umluftbetrieb.

Eine Versorgung des Fondbereichs mit vorkonditionierter Frischluft von dem Frontklimagerät ist bislang vor allem unter Verwendung eines Zusatzgebläses in der Mittelkonsole bekannt. Die Luftführung vom Frontklimagerät ausgehend bis zum Fondbereich erfolgt hierbei in der Regel in zwei klimatisch getrennten Kanälen, bevor die klimatisierte Luft, insbesondere in den Fußraum im Fond, im Bereich der B-Säule ausgegeben wird. Im Fond des Fahrzeugs kann dann auch für jede Seite des Fahrzeugs eine unterschiedliche Temperatur ausgewählt und die entsprechend klimatisierte Luft abgegeben werden. Ein zusätzlicher Umluftbetrieb ist hierbei nicht möglich.

Aus der DE 102 34 345 A1 ist eine Gebläseanordnung zur Belüftung eines Fahrzeugs bekannt, bei der eine Gebläseeinheit über ein Doppelgebläse zwei voneinander getrennte Luftströme in je einen Ausblaskanal abgeben kann. Der Betrieb der Gebläseanordnung ist jedoch auf den Umluftmodus beschränkt.

Die DE 199 54 308 A1 zeigt eine Gebläseanordnung gemäß Oberbegriff des Anspruchs 1.

Der Komfort von Zusatzklimageräten lässt sich steigern, wenn diese mit Frischluft versorgt und somit zusätzlich im Frischluftmodus betrieben werden können. Hierbei ist es aus aufgrund des verfügbaren Bauraums im Mitteftunnel und aus energetischen Gründen für die Dimensionierung der erforderlichen Größe der Wärmetauscher besonders vorteilhaft, wenn das Zusatzklimagerät mit bereits vorkonditionierter Luft aus dem Frontklimagerät versorgt werden kann.

Der Erfindung liegt die Aufgabe zugrunde, eine verbesserte Gebläseanordnung zur Belüftung eines Kraftfahrzeugs zur Verfügung zu stellen, welche eine gute Ausnutzung des Bauraums, einen erhöhten Komfort für die Insassen und verbesserte akustische Eigenschaften im Betrieb aufweist.

Diese Aufgabe wird erfindungsgemäß durch die Gebläseanordnung gemäß Anspruch 1 gelöst. Vorteilhafte Weiterbildungen sind Gegenstand der Unteransprüche.

Diese Gestaltung der zwei Ansaugkanäle ermöglicht es , den Betrieb der Gebläseanordnung um den Frischluftmodus zu erweitern, wodurch es möglich wird, dass insbesondere die Passagiere im Fond des Fahrzeugs mit Frischluft versorgt werden. Dies stellt einen erheblichen Komfortgewinn für die Insassen dar.

In einer bevorzugten Ausführungsform der erfindungsgemäßen Gebläseanordnung ist das Steuerelement vorzugsweise eine Klappe. Es sind aber auch andere Gestaltungen für das Steuerelement denkbar, beispielweise vorzugsweise Bänder mit unterschiedlich gestalteten Aussparungen, wobei sich die Bänder in Längsrichtung verschieben lassen und mit einem Element derart zusammenwirken, dass unterschiedliche Öffnungsquerschnitte freigegeben oder verschlossen werden. Des Weiteren können unterschiedliche Klappengeometrien eingesetzt werden.

In einer bevorzugten Ausführungsform der erfindungsgemäßen Gebläseanordnung ist eine Umluftklappe bevorzugt um eine Schwenkachse gelagert. Die Umluftklappe ist vorzugsweise im Gebläsegehäuse gelagert, kann in einer weiteren Ausführungsform der Gebläseanordnung auch bevorzugt au-βerhalb des Gebläsegehäuses gelagert sein. Die Stellung der Umluftklappe ist vorzugsweise kontinuierlich veränderbar, kann aber in einer weiteren Ausführungsform bevorzugt mit Hilfe einer veränderten kinematischen Gestaltung für deren Betätigung diskontinuierlich veränderbar sein.

In einer bevorzugten Ausführungsform der erfindungsgemäßen Gebläseanordnung geben die Ausblaskanäle die aus diesen austretenden, bevorzugt voneinander getrennten Luftströme vorzugsweise im Wesentlichen in horizontaler Richtung ab.

Hierbei ergibt sich gegenüber bekannten Gebläseanordnungen nach dem Stand der Technik der Vorteil, dass der vorhandene Bauraum im Bereich der Mittelkonsole für die Gebläseanordnung besonders gut genutzt wird, da bei im Wesentlichen identischen Abmaßen in Längs- und Querrichtung der Gebläseanordnung gegenüber dem Stand der Technik eine signifikante Verbesserung des Komforts durch den zusätzlichen Frischluftmodus erreicht wird.

In einer bevorzugten Ausführungsform der erfindungsgemäßen Gebläseanordnung wird bevorzugt wenigstens eine Umluftklappe von wenigstens einem Hebelmechanismus betätigt. In einer weiteren Ausführungsform sind bevorzugt eine Vielzahl von Umluftklappen über vorzugsweise jeweils einen eigenen Hebelmechanismus bevorzugt separat betätigbar, so dass die Flexibilität der Gebläseanordnung im Frischluftmodus noch gesteigert werden kann. Damit lassen sich die einzelnen Ansaugkanäle je nach Wunsch in einer individuellen Betriebsart einstellen.

In einer bevorzugten Ausführungsform der erfindungsgemäßen Gebläseanordnung ist der Öffnungsquerschnitt zur Aufnahme von Umluft eines Ansaugkanals vorzugsweise im Wesentlichen auf einer Unterseite des Gebläsegehäuses angeordnet, so dass die Umluft im Wesentlichen von unten, beispielsweise zwischen einem Fahrzeugmitteltunnel und dem Gebläsegehäuse aufgenommen wird. Hieraus ergeben sich deutlich verminderte Geräusche im Innenraum des Fahrzeugs, da eine direkte Schallabstrahlung im Bereich des Öffnungsquerschnitts der Umluftklappe von den Bauteilen des Fahrzeugtunnels reflektiert und ein Teil des Schalls absorbiert wird.

Die Ausblaskanäle sind bevorzugt getrennt voneinander ausgebildet, wobei diese in einer bevorzugten Ausführungsform der erfindungsgemäßen Gebläseanordnung die aus der Gebläseanordnung austretenden, voneinander getrennten Luftströme vorzugsweise im Wesentlichen in horizontaler Richtung abgeben. Die Trennung der Ausblaskanäle ermöglicht vorteilhafterweise eine Abgabe von Luftströmen mit unterschiedlicher Temperatur aus der Gebläseanordnung in den Fondbereich des Fahrzeugs. Dadurch wird der Komfort für die Insassen gesteigert.

Vorzugsweise sind in einer bevorzugten Ausführungsform der erfindungsgemäßen Gebläseanordnung im Gebläsegehäuse bevorzugt wenigstens zwei Ansaugräume ausgebildet, die bevorzugt durch eine Trennwand bevorzugt voneinander getrennt werden. Dadurch ist es möglich, die von dem Frontklimagerät aufgenommenen Luftströme durch die Ansaugkanäle hindurch bis zu den Ausblaskanälen auch innerhalb des Gebläsegehäuses getrennt zu führen.

Bei dem Gebläsegehäuse handelt es sich vorzugsweise um ein Kunststoffgehäuse.

Der Gebläsemotor ist bevorzugt gekapselt ausgeführt ist, wodurch die erforderliche Drucksituation zur Ansaugung der Luftströme im Gebläsegehäuse erreicht wird. Es ist vorzugsweise ein einzelner Gebläsemotor zum Antrieb des Doppelgebläses vorgesehen, wobei der Gebläsemotor vorzugsweise ein Elektromotor ist. Dies führt vorteilhafterweise zu einer Reduzierung der Motorgeräusche und erhöht damit den Komfort für die Insassen des Fahrzeugs. In einer weiteren Ausführungsform kann beispielsweise in je einem Ausblaskanal ein separater Gebläsemotor, welcher mindestens ein Laufrad aufweist, ausgebildet sein.

In einer bevorzugten Ausführungsform der erfindungsgemäßen Gebläseanordnung sind die einzelnen Gebläse des Doppelgebläses vorzugsweise einflutig und / oder mehrflutig ausgeführt. Unter Flutigkeit wird bei Radialgebläsen die Anzahl der Ansaugwege verstanden.

Die Laufradnaben eines einflutig oder mehrflutig ausgeführten Gebläses des Doppelgebläses sind bevorzugt mit Durchbrüchen versehen.

In einer bevorzugten Ausführungsform der erfindungsgemäßen Gebläseanordnung sind die Laufräder des Doppelgebläses bevorzugt verdrehfest mit einer Abtriebswelle des Gebläsemotors verbunden.

In einer bevorzugten Ausführungsform der erfindungsgemäßen Gebläseanordnung ist vorzugsweise eine Gebläsesteuereinrichtung zur Steuerung und/oder Regelung der Drehzahl des Gebläses vorhanden, welche bevorzugt innerhalb des Gebläsegehäuses angeordnet ist.

In einer besonders bevorzugten Ausführungsform der erfindungsgemäßen Gebläseanordnung wird vorzugsweise ein Teil des Luftmassenstroms in die Gebläsemotorkapselung zur Kühlung des Gebläsemotors und / oder der Steuereinheit geleitet.

Im Folgenden sollen nun beispielhafte Ausführungsformen der Erfindung anhand der Figuren näher erläutert werden. Es zeigt:
- Fig. 1: eine perspektivische Ansicht einer Gebläseanordnung nach einer Ausführungsform der vorliegenden Erfindung,
- Fig. 2: eine perspektivische Ansicht von unten gesehen einer erfindungsgemäßen Gebläseanordnung,
- Fig. 3: eine Vorderansicht einer Gebläseanordnung nach einer Ausführungsform der vorliegenden Erfindung,
- Fig. 4: eine Schnittansicht von der Seite einer Ausführungsform der Gebläseanordnung entlang der Schnittlinie A-A,
- Fig. 5: eine Schnittansicht von oben gesehen einer Ausführungsform der Gebläseanordnung entlang der Schnittlinie B-B,
- Fig. 6: eine Schnittdarstellung einer Ausführungsform der Gebläseanordnung gemäß Fig. 4,
- Fig. 7: eine perspektivische Ansicht von unten gesehen einer Ausführungsform der Gebläseanordnung für einen Modus, in dem Luft vom Frontklimagerät zugeführt wird,
- Fig. 8: eine perspektivische Ansicht von unten gesehen einer Ausführungsform gemäß Fig. 7 der Gebläseanordnung für den Teilumluftmodus,
- Fig. 9: eine perspektivische Darstellung für eine Umluftklappe zur Steuerung des Lufteinlass im Ansaugbereich,
- Fig 10: eine perspektivische Darstellung für eine Umluftklappe gemäß Fig. 9 und
- Fig. 11: eine perspektivische Darstellung für die Gebläseanordnung, welche mit einem Zusatzklimagerät verbunden ist.

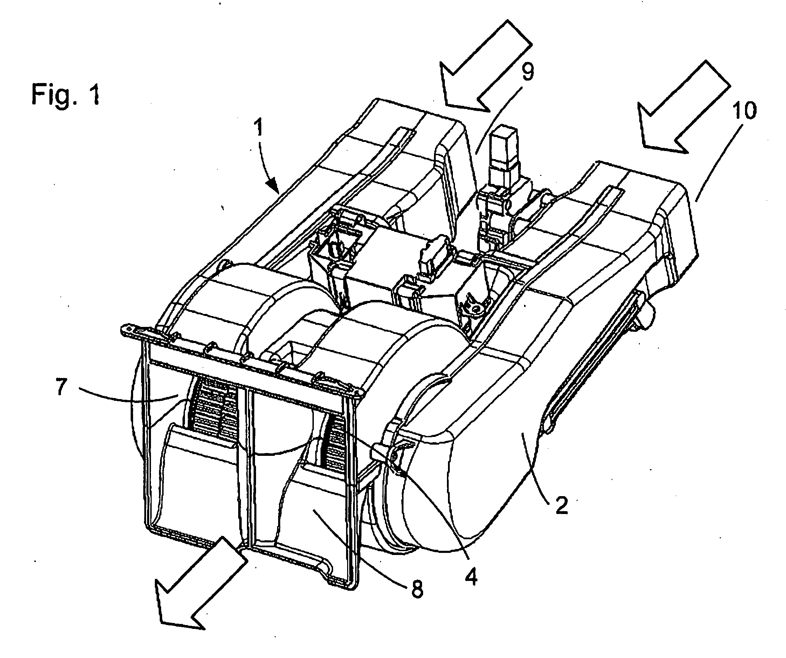

Fig. 1 zeigt eine Ausführungsform einer erfindungsgemäßen Gebläseanordnung 1. Diese umfasst im Wesentlichen ein Gebläsegehäuse 2, in dem ein aus zwei Gebläsen gebildetes Doppelgebläse 4 angeordnet ist. Die Gebläseanordnung weist ausgangsseitig zwei von einander getrennte Ausblaskanäle 7, 8 auf. Das Doppelgebläse 4 wird mittels eines Elektromotors 5 angetrieben, wobei beide Gebläse über den gemeinsamen Elektromotor 5 angetrieben werden. Das Doppelgebläse 4 ist eingangsseitig mit zwei voneinander getrennten Ansaugkanälen 9, 10 verbunden. Der jeweilige Ansaugkanal 9, 10 dient der Speisung eines der beiden Gebläse mit einem zugehörigen Ansaugstrom. Das Doppelgebläse 4 ist ausgangsseitig mit den Ausblaskanälen 7, 8 verbunden.

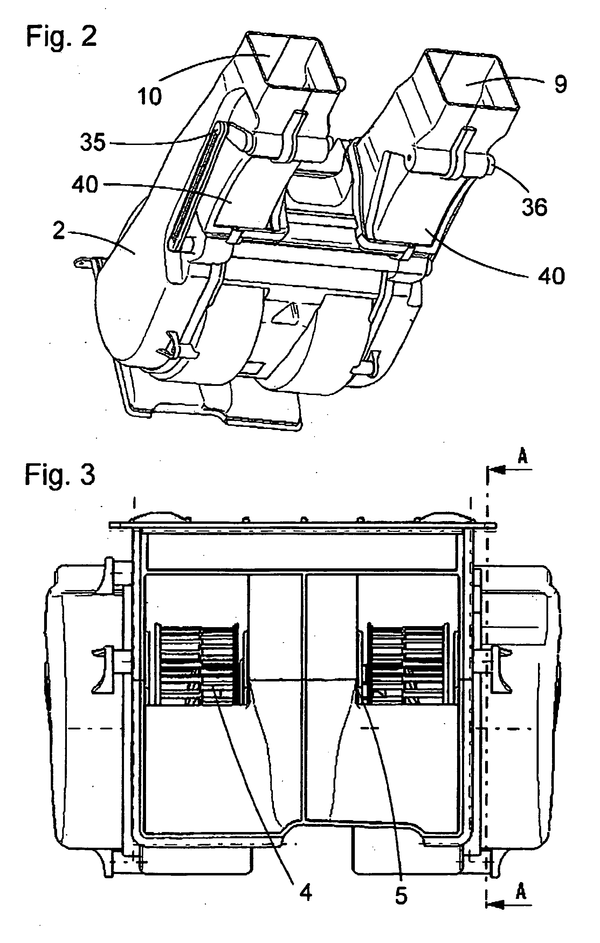

Fig. 2 zeigt eine perspektivische Ansicht von unten gesehen einer Ausführungsform der erfindungsgemäßen Gebläseanordnung, bei der auf der Unterseite des Gebläsegehäuses 2 auf je einer Seite im Bereich der Ansaugkanäle 9, 10 je eine Umluftklappe 40 angeordnet ist. Die Umluftklappen 40 werden von je einem zugehörigen Hebelmechanismus 35, 36 betätigt.

Fig. 3 zeigt eine Vorderansicht einer Ausführungsform nach einer Ausführungsform der vorliegenden Erfindung. Die beiden Gebläse des Doppelgebläses 4 werden einem gemeinsamen Gebläsemotor 5 angetrieben.

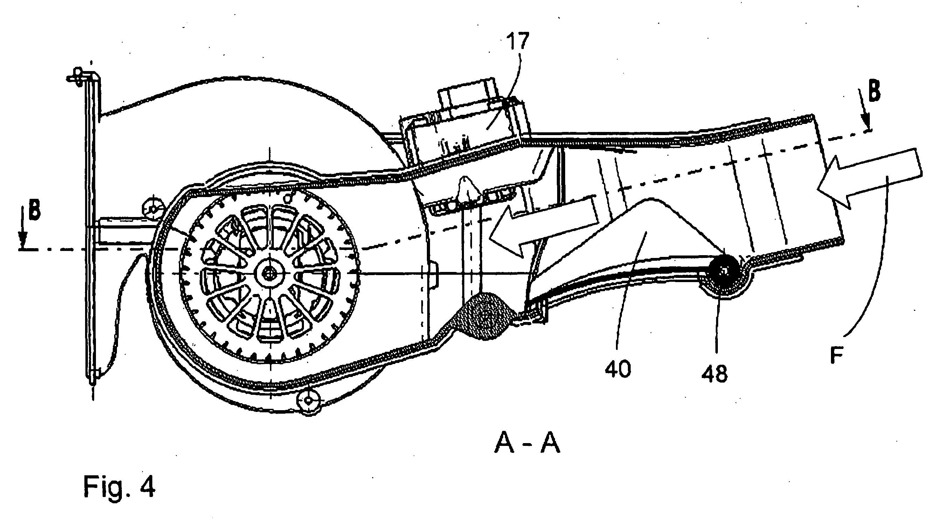

Fig. 4 zeigt eine Schnittansicht von der Seite einer Ausführungsform der erfindungsgemäßen Gebläseanordnung entlang der Schnittlinie A-A. Im Bereich der Ansaugkanäle 9, 10 sind die Umluftklappen 40 angeordnet und jeweils um ihre Schwenkachse 48 schwenkbar gelagert, welche im Wesentlichen an einem Ende der Umluftkappe 40 angeordnet ist. Die Umluftklappen 40 befinden sich in einer Stellung, in der der Öffnungsquerschnitt des Umlufteinlass verschlossen ist. Im Wesentlichen im Mittenbereich sowohl der Längs- als auch der Querrichtung des Gebläsegehäuses 2 ist eine Gebläsesteuereinrichtung 17 angeordnet, welche insbesondere die Drehzahl des Gebläsemotors steuert, aber auch noch weitere Aufgaben für den Betrieb der Gebläseanordnung übernehmen kann. Die Richtung und der Verlauf des Luftstroms vom Frontklimagerät (Luftstrom F) in einen Ansaugkanal bis zum Gebläse ist mit Hilfe von Pfeilen dargestellt. Die Richtung dieses Luftstroms ist in dieser erfindungsgemäßen Ausführungsform der Gebläseanordnung gegenüber der Horizontalen etwas geneigt.

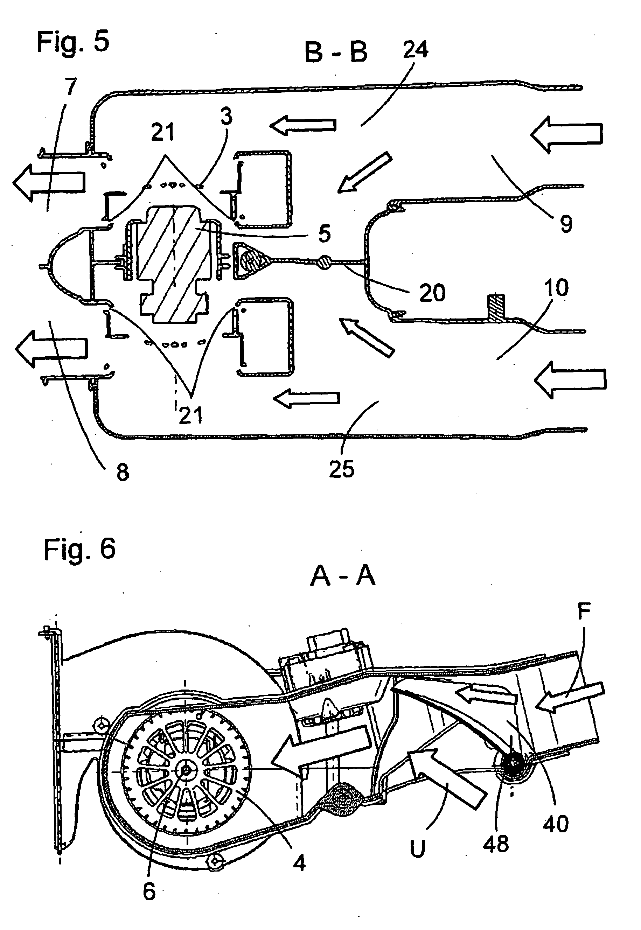

In Fig. 5 ist ein Schnitt durch eine Ausführungsform der erfindungsgemäßen Gebläseanordnung entlang der Schnittlinie B-B gemäß Fig. 4 darstellt. Zwischen Gebläsegehäuse 2, Gebläsemotor 5 und jedem Laufrad 3 eines Gebläses ist eine Vielzahl von Ringspalten 21 ausgebildet, welche jeweils zwischen dem Laufrad 3 und Gebläsemotor 5 zur Ansaugung der inneren Fluten dienen. Im Inneren des Gebläsegehäuses 2 ist in im Wesentlichen der Längsrichtung des Gebläsegehäuses 2 eine Trennwand 20 ausgebildet, welche in diesem Bereich der Ansaugräume 24, 25 die eingetretenen Luftströme aus den Ansaugkanälen 9, 10 und evtl. den Öffnungsquerschnitten des Außenlufteinlass voneinander getrennt halten. Damit lässt sich im Fondbereich, z. B. die linken und rechte Seite des Fußraums im Fond oder im Bereich der B-Säule getrennt voneinander klimatisieren. Die Richtung der ein-und austretenden Luftströme ist wiederum mit Hilfe von Pfeilen schematisch dargestellt. Die Luftströme sind an den Einlässen und den Auslässen im Wesentlichen parallel zueinander.

In Fig. 6 ist ein Schnitt einer Ausführungsform der erfindungsgemäßen Gebläseanordnung gemäß Fig. 4 dargestellt, wobei die Umluftklappe 40 um die Schwenkachse 48 derart verschwenkt wurde, dass sich die Umluftklappe 40 nun in der Stellung für den Teilumluftbetrieb der Gebläseanordnung befindet. Der Gebläseanordnung wird ein Luftstrom F vom Frontklimagerät (nicht dargestellt) zugeführt. In dieser Stellung der Umluftklappe 40 wird ein Spalt zwischen der Umluftklappe 40 und der Innenseite des Ansaugkanals gebildet, so dass immer noch ein Anteil von vorkonditionierter Luft vom Frontklimagerät nach dem Passieren der Umluftklappe 40 in Hauptströmungsrichtung zum Gebläse strömen kann. Die größte Luftmenge (Luftstrom U) wird durch den Öffnungsquerschnitt auf der Unterseite des Ansaugkanals aufgenommen und dem Doppelgebläse 4 zugeführt. In einer nicht dargestellten Ausführungsform der Erfindung kann in dieser Stellung die Umluftklappe 40 die Zufuhr von vorkonditionierter Frischluft (Luftstrom F) vom Frontklimagerät in Hauptströmungsrichtung zum Gebläse komplett sperren, so dass ein Luftstrom im Wesentlichen nur durch den Öffnungsquerschnitt auf der Unterseite des Ansaugkanals aufgenommen wird.

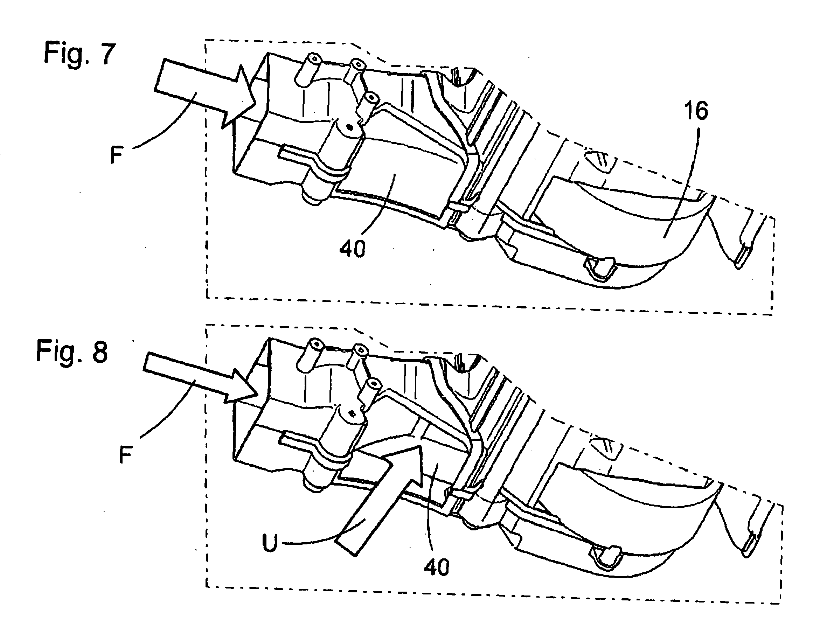

Fig. 7 zeigt eine perspektivische Ansicht von unten gesehen einer Ausführungsform der erfindungsgemäßen Gebläseanordnung für den Modus, in dem vorkonditioniert Luft vom Frontklimagerät (Luftstrom F) zugeführt wird. Aus Gründen der verbesserten Anschaulichkeit ist nur die linke Seite der Gebläseanordnung dargestellt. Die Laufräder 3 des Doppelgebläses 4 werden jeweils in einer Spirale 16 aufgenommen, so dass das Doppelgebläse 4 komplett gegenüber der Umgebung verschlossen ist. Die Umluftklappe 40 verhindert in dieser Stellung, dass Luft im Bereich des Öffnungsquerschnitts des Umlufteinlass an der Unterseite des Gebläsegehäuses 2 eintreten kann.

Fig. 8 zeigt eine perspektivische Ansicht von unten gesehen einer Ausführungsform gemäß Fig. 7 der Gebläseanordnung für den Teilumluftmodus, bei der die Umluftklappe 40 gegenüber der Stellung von Fig. 7 derart verschwenkt wurde, dass nun zusätzlich zum Luftstrom aus dem Frontklimagerät (Luftstrom. F) auch ein Luftstrom durch den Öffnungsquerschnitt im Bereich des Umlufteinlass (Luftstrom U) eintreten kann.

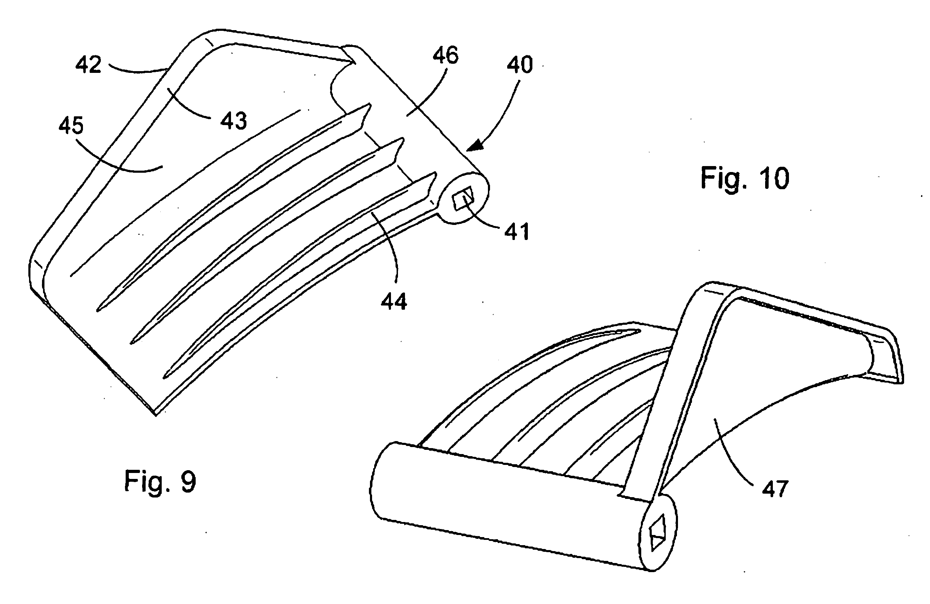

Fig. 9 zeigt eine erfindungsgemäße Umluftklappe 40 für den Umlufteinlass auf der linken Seite der Gebläseanordnung, die den Öffnungsquerschnitt des Umlufteinlass je nach ihrer Stellung vergrößert oder verkleinert. Die Umluftklappe 40 ist als ein einteiliges Bauteil ausgeführt. Die Umluftklappe 40 weist an einem Ende eine im Wesentlichen zylinderförmige Halterung 46 auf, in deren Inneren eine Aufnahme 41 ausgebildet ist. Die Aufnahme 41 wird durch eine Aussparung gebildet, welche sich entlang der Längsachse der Halterung 46 erstreckt und einen im Wesentlichen quadratischen Querschnitt aufweist. Von der Halterung 46 ausgehend ist eine Vielzahl von Versteifungs-Rippen 44 ausgebildet, welche sich bis im Wesentlichen dem anderen Endbereich der Umluftklappe 40 in deren Längsrichtung erstrecken. Die Höhe der Versteifungs-Rippen 44 ist im Bereich der Aufnahme 46 maximal und nimmt bis zu der Aufnahme 46 gegenüber liegenden Seite der Umluftklappe 40 hin ab. Jede Versteifungs-Rippe 44 weist eine Oberkante auf, deren Gestaltung gebogen ist. An einem Querende der Umluftklappe 40 ist von diesem Querende in Querrichtung der Umluftklappe 40 zum Inneren beabstandet eine Klappenflosse 42 ausgebildet, deren Gestaltung im Wesentlichen dreieck-förmig ist. Die Klappenflosse 42 wird zum Inneren der Umluftklappe 40 hin durch eine Flosseninnenwand 45 begrenzt, welche sich von einem Ende der Umluftklappe 40 bis im Wesentlichen zum Bereich der Halterung 46 erstreckt. Auf der Oberseite der Klappenflosse 42 erstreckt sich in Querrichtung von der Flosseninnenwand 45 bis zu einem Querende der Umluftklappe 40 ein Flossensteg 43.

Fig. 10 zeigt eine perspektivische Ansicht der Umluftklappe 40 gemäß Fig. 9. Auf der der Flosseninnenwand 45 gegenüber liegenden Seite der Flosse 42 erstreckt sich die im Wesentlichen dreieck-förmige Flossenaußenwand 47.

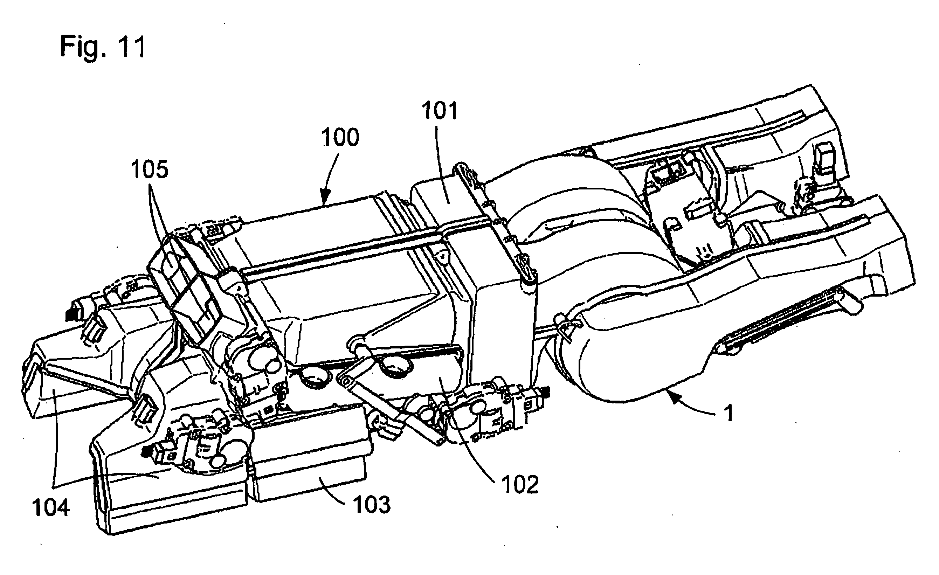

In Fig. 11 ist eine Ausführungsform der erfindungsgemäßen Gebläseanordnung 1 dargestellt: Die Gebläseanordnung ist mit einem Zusatzklimagerät 100 verbunden, welches wenigstens einen Verdampfer 101 und wenigstens einen Heizkörper 102 für die Klimatisierung der austretenden Luftströme aus der Gebläseanordnung 1 aufweist. Das Zusatzklimagerät 100 weist an einem Ende eine Vielzahl von Luftaustrittskanälen auf, welche u.a. Kanäle für die Fondbelüftung 105, für die Belüftung des Fußraums im Fond 103 sowie für die Belüftung des Bereichs der B-Säule 104 sind. Die Einbaulage dieser Baugruppe ist wie in Fig. 11 dargestellt im Wesentlichen in Längsrichtung des Fahrzeugs.

## Patentansprüche

1. Gebläseanordnung zur Belüftung eines Kraftfahrzeuges, welche ein von einem Gebläsemotor (5) angetriebenes Gebläse mit zwei Gebläserädern aufweist, mit eingangsseitig zwei getrennten Ansaugkanälen (9, 10), die jeweils mit einer Ansaugöffnung versehen sind, und ausgangsseitig zwei getrennte Ausblaskanäle (7, 8), **dadurch gekennzeichnet, dass** die zwei Ansaugkanäle (9, 10) jeweils einen von der Ansaugöffnung im Wesentlichen getrennten Öffnungsquerschnitt zur Aufnahme von Umluft aufweisen, und dass weiterhin vorgesehen ist, dass dessen jeweiliger Öffnungsquerschnitt mittels eines jeweiligen Steuerelements veränderbar ist und die Luftströme an den Einlässen und den Auslässen der Anordnung im Wesentlichen parallel sind.

2. Gebläseanordnung gemäß einem der vorherigen Ansprüche, **dadurch gekennzeichnet, dass** wenigstens ein Steuerelement eine Klappe, insbesondere eine Umluftklappe (40), ist.

3. Gebläseanordnung gemäß einem der vorherigen Ansprüche, **dadurch gekennzeichnet, dass** die Umluftklappe (40) um eine Schwenkachse (48) gelagert ist.

4. Gebläseanordnung gemäß einem der vorherigen Ansprüche, **dadurch gekennzeichnet, dass** die Umluftklappe (40) von wenigstens einem Hebelmechanismus (35, 36) betätigt wird.

5. Gebläseanordnung gemäß einem der vorherigen Ansprüche, bei der der Öffnungsquerschnitt zur Aufnahme von Umluft im Wesentlichen auf einer Unterseite des Gebläsegehäuses (2) angeordnet ist, so dass die Umluft im Wesentlichen von unten, insbesondere aus Richtung eines Mitteltunnels des Fahrzeugs, aufgenommen wird.

6. Gebläseanordnung gemäß einem der vorherigen Ansprüche, bei der im Gebläsegehäuse (2) wenigstens zwei Ansaugräume (24, 25) ausgebildet sind, die durch eine Trennwand (20) voneinander getrennt werden.

7. Gebläseanordnung gemäß einem der vorherigen Ansprüche, bei der der Gebläsemotor (5) gekapselt ausgeführt ist.

8. Gebläseanordnung gemäß Anspruch 7, bei der die einzelnen Gebläse des Doppelgebläses (4) einflutig und / oder mehrflutig ausgeführt sind.

9. Gebläseanordnung gemäß Anspruch 8, bei der die Laufradnaben eines einflutig oder mehrflutig ausgeführten Gebläses des Doppelgebläses (4) mit Durchbrüchen versehen sind.

10. Gebläseanordnung gemäß einem der vorherigen Ansprüche, bei der eine Gebläsesteuereinrichtung (17) zur Steuerung und / oder Regelung der Drehzahl des Gebläses vorhanden ist, die insbesondere innerhalb des Gebläsegehäuses (2) angeordnet ist.

11. Gebläseanordnung gemäß einem der vorherigen Ansprüche, bei der ein Teil des Luftmassenstroms in die Gebläsemotorkapselung zur Kühlung des Gebläsemotors (5) und / oder der Steuereinheit (17) geleitet wird.

12. Gebläseanordnung gemäß Anspruch 4, bei der eine Vielzahl von Umluftklappen (40) jeweils separat betätigbar sind.

## Claims

1. A fan assembly for ventilating a motor vehicle, which has a fan driven by a fan motor (5) and having two fan wheels, with two separate intake ducts (9, 10) on the intake side, each of which is equipped with an intake opening, and with two separate exhaust ducts (7, 8) at the output side, **characterised in that** each of the two intake ducts (9, 10) has an opening diameter, which is substantially separated from the intake opening, for taking up recirculated air, and **in that** it is further provided that the respective opening diameter of each intake duct can be modified by means of a respective control element, and that the air flows are substantially parallel to the intakes and the outputs of the assembly.

2. The fan assembly according to any one of the preceding claims, **characterized in that** at least one control element is a damper, particularly a recirculated air damper (40).

3. The fan assembly according to any one of the preceding claims, **characterized in that** the recirculated air damper (40) is mounted on a pivot axis (48).

4. The fan assembly according to any one of the preceding claims, **characterized in that** the recirculated air damper (40) is actuated via at least one lever mechanism (35, 36).

5. The fan assembly according to any one of the preceding claim, in which the opening diameter for taking up recirculated air is arranged substantially on a bottom side of the fan housing (2), so that the recirculated air is taken up substantially from the bottom, more particularly, from the direction of a center tunnel of the vehicle.

6. The fan assembly according to any one of the preceding claims, in which at least two intake chambers (24, 25) are formed in the fan housing (2), and are separated from one another by a partition (20).

7. The fan assembly according to any one of the preceding claims, in which the fan motor (5) is embodied as encapsulated.

8. The fan assembly according to claim 7, in which the individual fans of the dual fan (4) are embodied as single-inlet and/or multi-inlet.

9. The fan assembly according to claim 8, in which the runner hubs of a fan of the dual fan (4), said fan being embodied as single-inlet or multi-inlet, are equipped with perforations.

10. The fan assembly according to any one of the preceding claims, in which a fan control device (17) is provided for controlling and/or regulating the speed of the fan, said fan being disposed particularly inside the fan housing (2).

11. The fan assembly according to any one of the preceding claims, in which part of the air mass flow is conducted into the fan motor capsule for the purpose of cooling the fan motor (5) and/or the control unit (17).

12. The fan assembly according to claim 4, in which each of a plurality of recirculated air dampers (40) can be actuated separately.

## Revendications

1. Agencement de pulseurs pour la ventilation d'un véhicule automobile, agencement de pulseurs qui présente un pulseur comportant deux roues de pulseur et entraîné par un moteur de pulseur (5), ledit agencement de pulseurs comprenant, côté entrée, deux conduits d'aspiration séparés (9, 10) qui sont dotés respectivement d'une ouverture d'aspiration, et, côté sortie, deux conduits d'évacuation séparés (7, 8),
**caractérisé en ce que** les deux conduits d'aspiration (9, 10) présentent respectivement une couverture de section pratiquement séparée de l'ouverture d'aspiration et servant à capter de l'air recyclé, et **en ce qu'**il est prévu, en outre, que la section d'ouverture respective de ces conduits d'aspiration soit modifiable au moyen d'un élément de commandé respectif, et les flux d'air sont pratiquement parallèles au niveau des entrées et des sorties de l'agencement.

2. Agencement de pulseurs selon l'une ou l'autre des revendications précédentes, **caractérisé en ce qu'**au moins un élément de commande est un volet, en particulier un volet d'air recyclé (40).

3. Agencement de pulseurs selon l'une ou l'autre des revendications précédentes, **caractérisé en ce que** le volet d'air recyclé (40) est monté en rotation autour d'un axe de pivotement (48).

4. Agencement de pulseurs selon l'une quelconque des revendications précédentes, **caractérisé en ce que** le volet d'air recyclé (40) est actionne par au moins un mécanisme à levier (35, 36).

5. Agencement de pulseurs selon l'une quelconque des revendications précédentes, dans lequel la section d'ouverture servant à capter de l'air recyclé est disposée pratiquement sur une partie inférieure du carter (2) du pulseur, de sorte que l'air recyclé est capté pratiquement du dissous, en particulier à partir d'une direction d'un tunnel central du véhicule.

6. Agencement de pulseurs selon l'une quelconque des revendications précédentes, dans lequel sont configurés, dans le carter (2) du pulseur, au moins deux espaces d'aspiration (24, 25) qui sont séparés l'un de l'autre par une paroi de séparation (20).

7. Agencement de pulseurs selon l'une quelconque des revendications précédentes, dans lequel le moteur (5) du pulseur est réalisé en comportant un blindage.

8. Agencement de pulseurs selon la revendication 7, dans lequel les différents pulseurs du double pulseur (4) sont réalisés en étant à flux unique et / ou à flux multiples.

9. Agencement de pulseurs selon la revendication 8, dans lequel les moyeux des roues mobiles d'un pulseur du double pulseur (4), réalisé en étant à flux unique ou à flux multiples, sont dotés de passages.

10. Agencement de pulseurs selon l'une quelconque des revendications précédentes, dans lequel un dispositif de commande (17) du pulseur est présent pour la commande et / ou la régulation de la vitesse du pulseur, dispositif de commande qui est disposé en particulier à l'intérieur du carter (2) du pulseur.

11. Agencement de pulseurs selon l'une quelconque des revendications précédente, dans lequel une partie du flux de la masse d'air est dirigée dans le blindage moteur du pulseur, pour le refroidissement du moteur (5) du pulseur et / ou de l'ensemble de commande (17).

12. Agencement de pulseurs selon la revendication 4, dans lequel une multiplicité de volets d'air recyclé (40) peut à chaque fois être actionnée séparément.
